# EUROPEAN PATENT SPECIFICATION

(11) **EP 0 479 267 B1**
(45) Date of publication and mention of the grant of the patent: **11.12.1996**
(21) Application number: 91116814.4
(22) Date of filing: 02.10.1991
(51) Int. Cl.: F23J 15/00, F23G 5/20

(54) **Process and device for waste incineration**
Verfahren und Vorrichtung zur Abfallverbrennung
Procédé et dispositif pour l'incinération des déchets

(30) Priority: 05.10.1990 DE 4031493
(43) Date of publication of application: 08.04.1992
(73) Proprietor: RWE-Entsorgung Aktiengesellschaft, 45141 Essen (DE)
(72) Inventor: Wintrich, Franz, Dipl.-Ing., W-4300 Essen 13 (DE); Herbermann, Michael, Dr., W-4390 Gladbeck (DE)

(56) References cited:
- EP-A- 0 207 924
- WO-A-88/07648
- DE-A- 3 735 061
- DE-A- 3 813 817
- FR-A- 2 308 864

## Description

The instant invention relates to a process and device for waste incineration with an oxidation agent, which consists of air with an oxygen content of 75 to 100 vol.-% oxygen, whereby the combustion gases pass through a filter, which is resistant to high temperatures and which is arranged behind the slag separator and whereby the gases are cooled after filtration.

Waste incineration with oxygen, which is present in a higher concentration than in air is known.

In DE-PS 3735061 a process is disclosed, wherein, in order to reduce the quantity of flue gas and to increase the flame temperature, an oxidation gas is applied with more than 50 % of oxygen, preferably with 99 % of oxygen. The high flue gas temperature of approximately 1.800 °C is used in a waste heat boiler for the production of steam. By addition of metal oxides, acids, which are formed, for example hydrogen chloride are chemically bound. Subsequently dust, which is present in the flue gas, is separated in a gas purification unit.

The further development of this process is disclosed in DE-OS 3813817.

In order to avoid too high temperatures in the combustion chamber as a consequence of the high concentration of oxygen used, part of the cooled flue gas is recycled to the combustion chamber.

In EP 0 207 924 A1 a process is disclosed for incinerating combustible material in order to cut down the noxious nitrogenous gases, as well as poisonous dioxins and furans by using air for incineration, containing an excess of oxygen.
For filtration of the flue gas practically any filter can be used.

FR 2 308 864 A1 discloses a combustion unit followed by a filter system. After filtration the flue gas still contains up to 50 milligrams of dust per cubic meter. Fresh air is introduced in the vicinity of the filter system in order to burn deposits resting on the filter.

WO-A-8 807 648 discloses a waste material incinerator, which produces an exhaust, containing trace amounts of toxic organic substances. Filter means are disposed in the channelling for absorbing heat and for detaining all exhaust gases in the exhaust for a time period sufficient to destroy all toxic organic substances in the exhaust. The filter is heated up to > 700 °C.

It is known to a person skilled in the art that in incinerations at high temperatures dioxin and chlorinated dibenzofuranes are not stable and are burned in the presence of oxygen.

This has led to the conclusion that if a temperature higher than 1.250 °C is maintained during waste incineration, no dioxin respectively chlorinated dibenzofuranes are present in combustion gases.

In the meantime it has become known, that this assumption is not correct.

In contrast, investigations have shown, that after cooling the combustion gases in the temperature range of 200 to 400 °C, preferably at approximately 300 °C, in the presence of excess oxygen and in the presence of catalytically active fly ash, chlorine is formed along the lines of the Deacon-process from hydrogen chloride, which is formed during combustion. In particular, copper components are very active catalysts. This is represented by the following reaction equations:

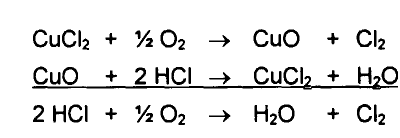

In the presence of carbon and catalytically active metal compounds and in the presence of excess oxygen chlorine triggers the formation of dioxin respectively dibenzofuranes even in the absence of chlorine containing organic precursors. This dioxin - respectively dibenzofurane formation is also known as ,,de novo"-synthesis (see for example VDI-Berichte 634 ,,Dioxin, H. Hagenmeier, H. Brunner, R. Hack, M. Kraft, 1987, pages 557 - 584, VDI-Verlag GmbH, Düsseldorf).

The present invention has surprisingly and non-obviously shown, that it is possible to work with high concentrations of oxygen in waste incineration, with the result, that no dioxin and/or chlorinated dibenzofurane is present in the combustion gases, by a process for waste incineration comprising the steps of introducing waste into a rotary kiln, supplying a gas mixture to the rotary kiln, the gas mixture containing oxygen at a concentration higher than the oxygen concentration present in air, incinerating the waste in the rotary kiln, feeding the exhaust gas to a high temperature resistant filter arranged behind the combustion zone, which removes particles from the exhaust gas and subsequently cooling the exhaust gas in a cooling zone, characterized in that the gas mixture supplied to the rotary kiln has an oxygen content of 75 vol.-% to 100 vol.-% of oxygen, in that the exhaust gas passes through a slag separator arranged behind the rotary kiln and in that the exhaust gas subsequently passes through a high temperature resistant filter, where it is filtered while still very hot to thereby prevent the formation of dioxins and dibenzofurans.

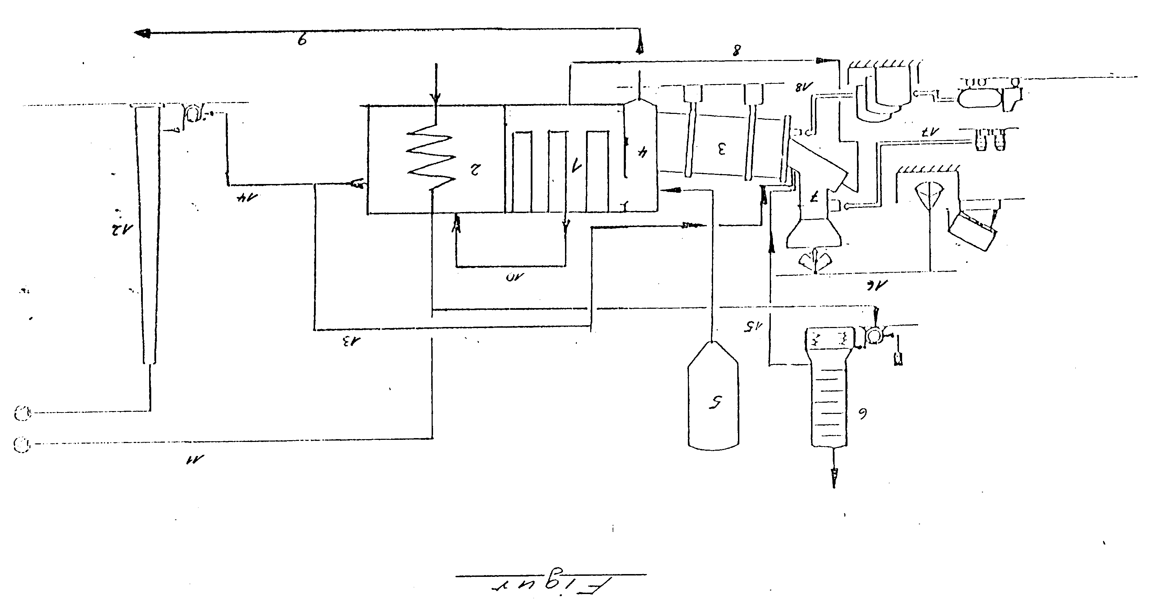

The figure schematically represents the inventive process and the device for carrying out this process.

The combustion in the presence of high concentrations of oxygen has several advantages, like reduction of the total quantity of combustion gas, lower energy consumption, reduction of the emission of toxic agents and in addition the combustion gas purification unit has a smaller size.

Since on the other hand, excess of oxygen as outlined above, favours the formation of dioxin and chlorinated dibenzofuranes, this disadvantage impairs the use of high oxygen concentrations in waste incineration.

The present invention has overcome this disadvantage by filtration of the still very hot combustion gases. Non-obviously it has been shown that by separation of the fly ash in the combustion gas, even in the presents of high oxygen concentrations, the ,,de novo"-syntheses can be completely eliminated, with the result, that dioxin and chlorinated dibenzofuranes can no longer be detected even with the most sensitive analytical devices respectively methods.

(It is known, that the maximum permissible concentration of dioxin in combustion gases or other waste gases is 0,1 x 10⁻⁹ gm³ (10⁻⁹ g = 1 ng).

The inventive filters must be resistant to very high temperatures. Suitable devices are ceramic filters or filters consisting of high temperature resistant fiber material. It is known to the person skilled in the art that such fibers consist of metal oxides and in particular contain Al₂O₃ and/or SiO₂, however also other metal oxides can be additionally present, like for example Cr₂O₃, ZrO₂, TiO₂, GeO₂, SnO₂ and others. Also metal fibers and mixtures of fibers of different materials are suitable according to the invention.

Arrangement and shape of the filters can vary in a wide range. It is essential however that the combustion gases are passed completely or at least to the highest possible extent through the filter. According to the invention, single filters can be applied or filter arrangements consisting of at least two filters.

The filter construction and shape has not to be elucidated in detail, since an extensive state of the art is available, in particular for technical applications.

Waste incinerations are carried out in a broad temperature range, namely from 600 to 2.000 °C. This range is also valid for the instant invention. A preferred range is 800 to 2.000 °C and a particularly preferable range is 1.200 to 2.000 °C.

Basically the combustion can also be carried out above 2.000 °C. For economical reasons and with regard to the materials used, such high temperatures however are only of minor interest.

The oxygen concentration is 75 to 100 volume-%.

The present invention is explained in more detail with the aid of the figure.

(1) represents the filter zone, which is directly arranged behind the rotary kiln (3) and separated from the latter only by a slag separator (4). The filtered combustion gas passes through piping (10) into the cooling zone (2), where the combustion gas is cooled by production of steam. The steam leaves the unit through piping (11).

Subsequently the combustion gas passes through (14) to chimney (12) into the atmosphere. Part of the cooled combustion gas is recycled through tubing (13) into the rotary kiln (3) for the purpose of temperature control.

The various types of waste like sludge, pastes, garbage, used oils, solvents, plastics and numerous other wastes pass through (16) (17) (18) and gate (7) into the rotary kiln (3).

From air separation unit (6) oxygen is introduced through piping (15) into the rotary kiln. (5) serves as an additive storage, for example for ammonium salts, chalk, calcium carbonate, magnesium carbonate and others. The additive selection and the quantity used depend on the type of waste materials fed to the combustion unit and are known to a person skilled in the art.

The dust which is selected in filter zone (1) is recycled through piping (8) to the rotary kiln and finally is obtained as a slag through piping (9).

As an example 15 t/h of waste and 15.000 kg/h of oxygen are introduced into the rotary kiln operated at 1.800 °C. 28.000 nm³h are transferred through the filter zone into the cooling zone. The combustion gas leaves the cooling zone with a temperature < 200 °C and passes to the chimney.

## Claims

1. A process for waste incineration comprising the steps of introducing waste into a rotary kiln, supplying a gas mixture to the rotary kiln, the gas mixture containing oxygen at a concentration higher than the oxygen concentration present in air, incinerating the waste in the rotary kiln, feeding the exhaust gas to a high temperature resistant filter arranged behind the combustion zone, which removes particles from the exhaust gas and subsequently cooling the exhaust gas in a cooling zone, characterized in that the gas mixture supplied to the rotary kiln has an oxygen content of 75 vol.-% to 100 vol.-% of oxygen, in that the exhaust gas passes through a slag separator arranged behind the rotary kiln and in that the exhaust gas subsequently passes through a high temperature resistant filter, where it is filtered while still very hot to thereby prevent the formation of dioxins and dibenzofurans.

## Patentansprüche

1. Verfahren zur Abfallverbrennung, das die Schritte der Zuführung von Abfall in einen Drehrohrofen aufweist, der Zuführung eines Gasgemischs einer höheren Sauerstoffkonzentration als Luft aufweist, der Verbrennung des Abfalls im Drehrohrofen, der Leitung des Verbrennungsgases durch ein hochtemperaturfestes Filter, das hinter der Verbrennungszone angeordnet ist und Partikel aus dem Verbrennungsgas entfernt und der anschließenden Kühlung des Verbrennungsgases in einer Kühlzone, dadurch gekennzeichnet, daß das Gasgemisch, das dem Drehrohrofen zugeführt wird, einen Sauerstoffgehalt von 75 bis 100 Vol.-% aufweist, daß das Verbrennungsgas durch einen Schlackenseparator strömt, der hinter dem Drehrohrofen angeordnet ist, und daß das Verbrennungsgas anschließend durch den hochtemperaturfesten Filter strömt, wo es noch in sehr heißem Zustand gefiltert wird, wobei die Bildung von Dioxinen und Dibenzofuranen verhindert wird.

## Revendications

1. Un procédé pour calciner des déchets montrant les pas de amener les déchets dans un four rotatif, de amener un mélange de gaz dans le four rotatif, à l'occasion de quoi le mélange de gaz contiens de l'oxygène d'une concentration, quelle est plus haut comme dans l'air, de calciner les déchets dans le four rotatif, de conduire le gaz de la combustion à travers un filtre résistant à températures trés élevées, situé après la zone de combustion qu'éloigne des particules du gaz de la combustion et de refroidir le gaz de la combustion dans une zone de refroidissement, caractérisé en ce que le mélange de gaz, amené dans le four rotatif a une concentration d'oxygène de 75 à 100 pourcent volumétrique, en ce que le gaz de la combustion traverse un séparateur scorificatoire et traverse après un filtre résistant à températures trés élevé dans lequel le gaz de la combustion est filtré encore trés chaud à l'occasion de quoi la formation des dioxines et des dibenzofurans est empêchée.
